# EUROPÄISCHE PATENTSCHRIFT

(11) **EP 0 903 723 B1**
(45) Veröffentlichungstag und Bekanntmachung des Hinweises auf die Patenterteilung: **03.11.2004**
(21) Anmeldenummer: 98115974.2
(22) Anmeldetag: 25.08.1998
(51) Int. Cl.: G09G 5/28

(54) **Anzeigevorrichtung mit und ohne Antialiasing**
Display device with and without anti-aliasing
Dispositif d'affichage avec et sans anti-crénelage

(30) Priorität: 11.09.1997 DE 19740033
(43) Veröffentlichungstag der Anmeldung: 24.03.1999
(73) Patentinhaber: BORG Instruments AG, 75196 Remchingen (DE)
(72) Erfinder: Baecke, Thomas, 76337 Waldbronn (DE); Hartmann, Peter, 76229 Karlsruhe (DE)
(74) Vertreter: Hemmelmann, Klaus

(56) Entgegenhaltungen:
- EP-A- 0 488 534
- DE-A- 4 303 262
- GB-A- 2 282 514
- US-A- 5 638 463

## Beschreibung

Die Erfindung betrifft eine Anzeigevorrichtung zur optischen Wiedergabe von Grafik, mit einer Datenverarbeitungsanlage zur graphischen Aufbereitung von darzustellender Information und einer Anzeigeeinheit zur Sichtbarmachung der aufbereiteten Information, wobei die Datenverarbeitungsanlage bei der graphischen Aufbereitung unter anderem Antialiasingverfahren verwendet.

Objekte, die synthetisch erzeugt werden und symbolisch mittels Kanten, Konturen und Flächen beschrieben sind, werden als Folge der Rasterung des Darstellungsbereichs als diskrete Punktanordnung auf Matrix-Displays dargestellt. Da im Bereich der generativen Graphik noch nicht das Auflösungsvermögen wie z.B. in der Photographie erreicht wurde, sind charakteristische Bildfehler (Darstellungsfehler) zu beobachten, die unter dem Begriff Aliasing-Effekte zusammengefaßt werden. Diese Effekte äußern sich typischerweise im treppenförmigen Verlauf eigentlich glatter Linien und Flächengrenzen zwischen Strukturen im Originalbild und dem Rastergitter des Bildschirms. Auch Verschiebungen und gar vollständige Verluste von Details gehören ebenso zum Umfang des Aliasing wie die Veränderung von Konturen oder das Blinken von feinen Details in bewegten Bildern.

Es existieren Verfahren, um Bildfehler zu minimieren und dadurch die Bildqualität zu steigern. Diese Verfahren werden allgemein als Antialiasingverfahren bzw. -algorithmen bezeichnet.

Bei einem ersten Verfahren wird das Bild mit einer höheren Auflösung berechnet als später auf dem Monitor angezeigt. Nach der Berechnung wird das Bild mittels eines digitalen Filters auf die gewünschte Auflösung reduziert, die einzelnen informationstragenden Pixel des ursprünglichen Bildes werden dabei gewichtet zusammengefaßt. Dadurch treten weniger Aliasing-Effekte auf, die Methode ist aber sehr kostspielig, da die anfallenden Berechnungen proportional zum -Quadrat -der Auflösung des Matrix-Displays anwachsen. Die einzelnen Pixel werden dabei als diskrete Punkte im mathematischen Sinne betrachtet.

Bei einem anderen Verfahren wird das Bild vorgefiltert und so versucht, alle hohen Frequenzen herauszufiltern. Bei diesem Verfahren wird sozusagen künstliche Unschärfe" erzeugt, die Aliasing-Effekte werden verwischt und so gemindert. Diese Vorgehensweise ist äquivalent mit der Betrachtung der einzelnen Pixel als elementare Fläche.

Bei einem weiteren Verfahren werden zur Reduzierung von zeitlichen Abtastfehlern mehr Bilder generiert, als für eine Bildsequenz notwendig sind, um diese danach auf die zeitliche Ausgaberate gewichtet zusammenzufiltern. Konturen von bewegten Objekten werden durch diese Maßnahme verwischt (Bewegungsunschärfe, engl. motion blur).

Eine mögliche Verbesserung zur Unterdrückung von Aliasing-Effekten besteht in der Erhöhung der Pixelzahl pro Flächeneinheit. Dies geht jedoch einher mit höheren Kosten durch teurere Matrix-Displays sowie zusätzlichem Speicher und Rechenaufwand. Gerade bei den Instrumentierungen und Multifunktionsanzeigen in Kraftfahrzeugen finden aus Kostengründen nur relativ klein und niedrig auflösende Anzeigen für die Darstellung von digitalisierten monochromen oder farbigen Bildern Verwendung.

Da zunehmend neben den normalen Standard-Instrumentierungen wie Digitalanzeigen und Zeigerinstrumenten auch noch Graphiken wie z.B. für Navigationslandkarten auf den Instrumentierungen und Multifunktionsanzeigen im Kraftfahrzeug dargestellt werden sollen, ergeben sich durch die niedrigen graphischen Auflösungen der Anzeigen starke Aliasing-Effekte. Im Bereich der Fahrzeuginstrumentierung werden heute meist kleine Anzeigen mit bis zu 400.000 Bildpunkten verwendet. Dadurch ergibt sich bei diesen Anzeigen (resultierend aus Pixelgröße, -apparatur, -geometrie, -konfiguration) starke Aliasing-Effekte. Durch die geringe Auflösung können beispielsweise kleine schräggestellte Buchstaben nicht mehr verzerrungsfrei bzw. lesbar dargestellt werden. Auch bei durch lange oder sehr kurze Linien dargestellte Straßen und anderen graphischen Objekten sind starke Aliasing-Effekte zu beobachten. Die Bildqualität ist hierdurch stark eingeschränkt und der Informationsgehalt läßt sich nur noch schlecht ablesen.

Bedingt durch die hohen Kosten für hochauflösende Anzeigen werden deshalb verstärkt Antialiasing-Techniken zur Erhöhung der virtuellen Auflösung von Monitoren und Displays verwendet, wobei jedoch Einbußen in der Bildaufbereitungszeit wegen der hohen Rechenanforderungen in Kauf genommen werden müssen, es sei denn man bedient sich eines Grafikbeschleunigers, der Antialiasingalgorithmen durch entsprechende Verschaltung sehr schnell durchführen kann.

Glättungsverfahren sind auch aus dem Bereich der Drucker bekannt. So zeigt EP 488 534 A2 Methoden, um bei Ausdrucken die Qualität der Schrift durch Glättung zu verbessern, ohne Rechenkapazität in größerem Maße für die Glättung von Bildbestandteilen zu verbrauchen. Dazu wird in dieser Anmeldung das eine zur Verfügung stehende Glättungsverfahren entweder nur auf die Schrift oder nur auf einen Bereich des Gesamtausdruckes angewendet.

Aufgabe der vorliegenden Erfindung ist es, eine Anzeigevorrichtung bereitzustellen, bei der durch den Einsatz von Antialiasingverfahren die Bildqualität erhöht wird und andererseits die Anforderungen an eine schnelle Bildwiederholungszahl (frame update rate) gewährleistet ist, so daß ein möglichst ruckfreies Bild entsteht. Diese Aufgabe wird erfindungsgemäß dadurch gelöst, daß bei der Generierung eines Bildes die Datenverarbeitungsanlage zur graphischen Aufbereitung mindestens zweier Bildbereiche oder Bildobjekte des Bildes, für diese Bildbereiche oder Bildobjekte unterschiedliche Antialiasingverfahren verwendet oder einen Bildbereich oder ein Bildobjekt ohne Antialiasingverfahren darstellt. Durch ein derartiges Vorgehen bei der Generierung eines Bildes können z.B. Objekte, die sich über die Zeit betrachtet relativ langsam bewegen, mit einem Antialiasingverfahren dargestellt werden, welche eine bessere Bildqualität für diesen Bildbereich oder dieses Bildobjekt ermöglicht. Dagegen können sich schnell bewegte Bildobjekte bzw. Bildbereiche, in denen die Objekte schnell bewegt werden, mit einem weniger rechenintensiven Antialiasingverfahren oder gänzlich ohne Antialiasingverfahren dargestellt werden. Durch diese Kompromiß wird vorteilhaft Rechenleistung eingespart, so daß trotz erhöhter Bildqualität eine hohe Bildwiederholungsrate erzielt wird bzw. die Zahl von neu berechneten Bildern pro Sekunde relativ hoch bleibt.

Dieser Vorteil läßt sich durch die erfindungsgemäße Lösung erzielen, bei der in Abhängigkeit der zur Verfügung stehenden Rechenleistung der Datenverarbeitungsanlage und/oder der Bildwiederholungsrate und/oder der Anzahl der darzustellenden Objekte bei der Generierung aufeinanderfolgend darzustellenden Bilder unterschiedliche Antialiasingverfahren zur Anwendung gelangen. Bei dieser Lösung ermittelt die Datenverarbeitungsanlage jeweils die benötigte Zeit für die Darstellung der darzustellenden Objekte des Bildes für unterschiedliche Antialiasingverfahren und ermittelt dann, ob die Rechenleistung und Zeit, welche sich durch die geforderte Bildwiederholungsrate ergibt ausreicht, um das Bild mit einem bestimmten Antialiasingverfahren darzustellen. Reicht die Zeit zur Darstellung des mit Hilfe eines Antialiasingverfahrens erzeugten Bildes nicht aus, so muß ein weniger rechenintensives Antialiasingverfahren für die Darstellung des Bildes gewählt werden. Dabei kann in der Datenverarbeitungsanlage eine Tabelle gespeichert sein, aus der direkt ablesbar ist, ob eine bestimmte Anzahl von Bildobjekten mit einem bestimmten Antialiasingverfahren in einer bestimmten Zeit darstellbar bzw. berechenbar ist oder nicht.

Es versteht sich von selbst, daß die beiden obengenannten Lösungen auch miteinander kombiniert werden können, so daß sich eine sehr variable Möglichkeit der Bildaufbereitung bzw. Darstellung ergibt und somit die vorhandene Hardware optimal ausgenutzt werden kann.

Ebenfalls von Vorteil ist es, wenn bei der Generierung eines Bildes so lange ein rechenintensives Antialiasingverfahren für die Darstellung einzelner Bildbereiche und/oder Objekte verwendet wird, bis die Anforderung nach einem neuen Bild-Update generiert wird und dann die restlich darzustellenden Bildbereiche bzw. Objekte gar nicht oder nur mit einem weniger rechenintensiven Antialiasingverfahren dargestellt werden. Gerade bei Anzeigen in Verkehrsmitteln kann bedingt durch eine sich ändernde Situation ein schneller Bildwechsel plötzlich erforderlich sein. Um dennoch sämtliche noch nicht gezeichneten Objekte auf der Anzeige darzustellen, kann durch den Wechsel des bislang für den momentanen Bildaufbau verwendeten Antialiasingverfahren zu einem weniger rechenintensiven Verfahren bzw. Algorithmus ein Zeitgewinn erzielt werden, wodurch der restliche Bildaufbau schneller vonstatten geht.

Auch ist es vorteilhaft, wenn der Datenverarbeitungsanlage vorgebbar ist, für welchen Bildbereich sie welches Antialiasingverfahren verwendet. Dabei kann natürlich auch ein Bildbereich bzw. ein Bildobjekt ohne ein Antialiasingverfahren dargestellt werden. So kann z.B. eine analoge Uhr mit Zeigern mit einem rechenintensiven Antialiasingverfahren auf dem Matrix-Display dargestellt werden, wohingegen die Navigationskarte, welche ebenfalls mittels desselben Matrix-Displays dargestellt wird, mit einem weniger rechenintensiven Antialiasingverfahren dargestellt wird, da sich in der Regel die Objekte auf der Navigationskarte bei schneller Fahrt und häufigen Richtungswechseln schneller bewegen als die Zeiger der analogen Uhr. Bei dem verwendeten Verfahren kann dann z.B. bei einer niedrigeren Geschwindigkeit des Fahrzeugs auch die Navigationskarte mittels eines rechenintensiven Antialiasingverfahrens dargestellt werden, da die Zahl von neu zu berechnenden Bildern pro Sekunde bei niedrigen Geschwindigkeiten niedriger ist.

In einer weiteren Ausführungsform der Erfindung ist der Datenverarbeitungsanlage vorgebbar, daß sie für die Bildaufbereitung eines bestimmten Bildbereichs und/oder Bildobjekts oder auch für das gesamte Bild je nach verfügbarer Rechenleistung und Zeit, wobei sich die Zeit durch die Bildwiederholungsrate bzw. der Zeit von neu zu berechnenden Bildern pro Sekunde bestimmt, ein bestimmtes mehr oder weniger rechenintensives Antialiasingverfahren verwendet werden soll.

Folgende Antialiasingverfahren sind vorstellbar. Zum einen kann bei einer geringen Rechenleistung bzw. bei sich sehr schnell ändernden Graphiken kein Antialiasingverfahren eingesetzt werden, das heißt Linien und Konturen werden ausschließlich mit Hilfe von Standart-Algorithmen dargestellt und werden nicht weiter verarbeitet. Je weiter die zur Verfügung stehende Rechenleistung und/oder Zeit zunimmt, desto rechenintensiver kann der Verwendung findende Antialiasing-Algorithmus sein.

Diesen wesentlichen Teil der Erfindung kann man skaliertes Antialiasing bezeichnen. Die einzelnen Stufen sind mit zunehmender Rechenintensität in Anspruch 6 aufgezählt.

Nachfolgend wird die Erfindung anhand von Figuren näher erläutert.

Es zeigen
- Figuren 1 bis 4:: Darstellungen von Text und Linien mit und ohne Antialiasing-Verfahren;
- Figur 5:: Ein Kfz-Kombiinstrument zur Anzeige der Uhrzeit sowie unter anderem einer Navigationskarte.

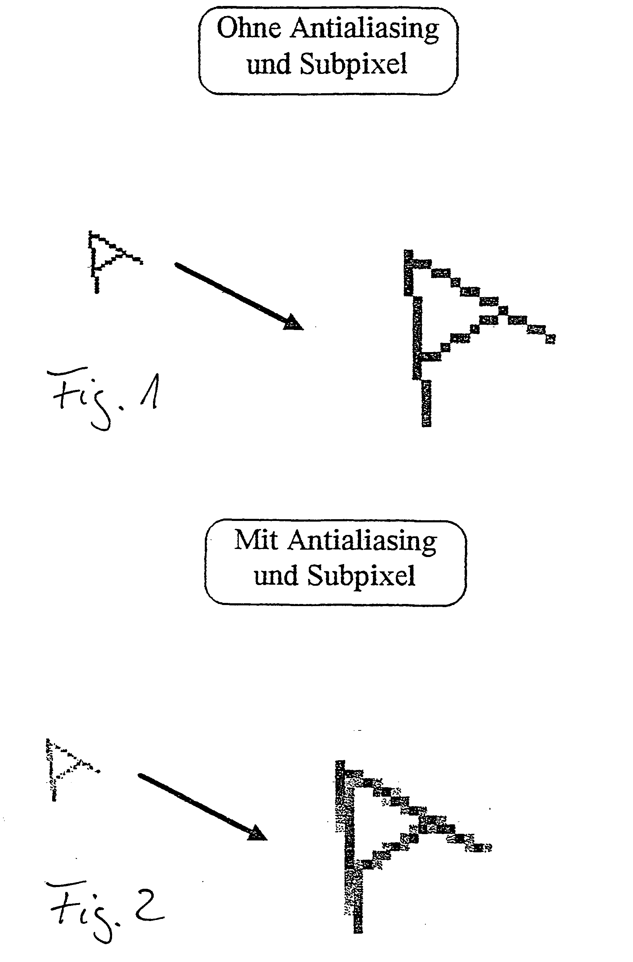

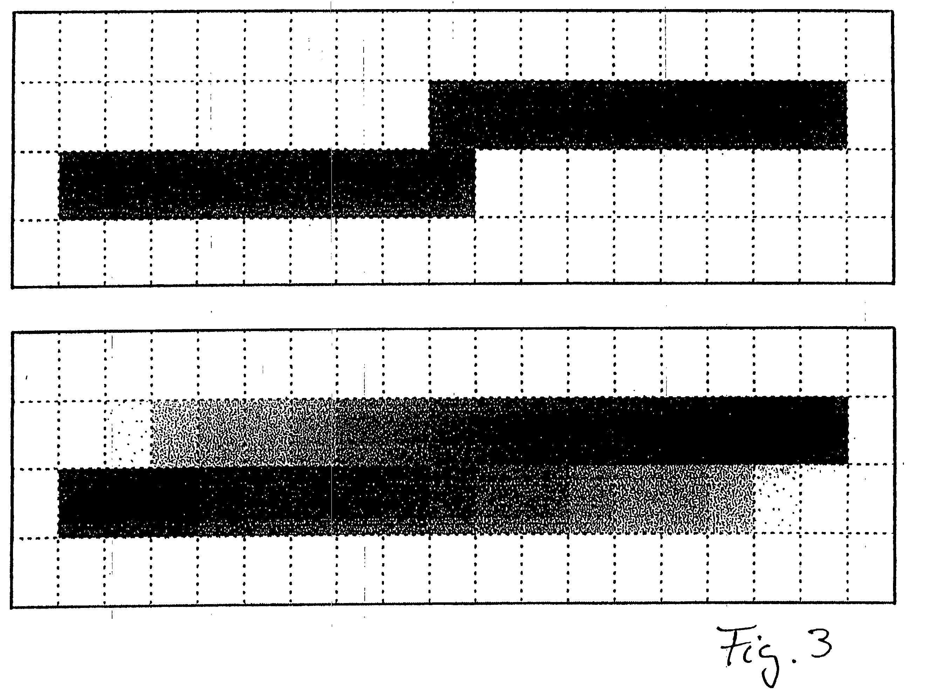

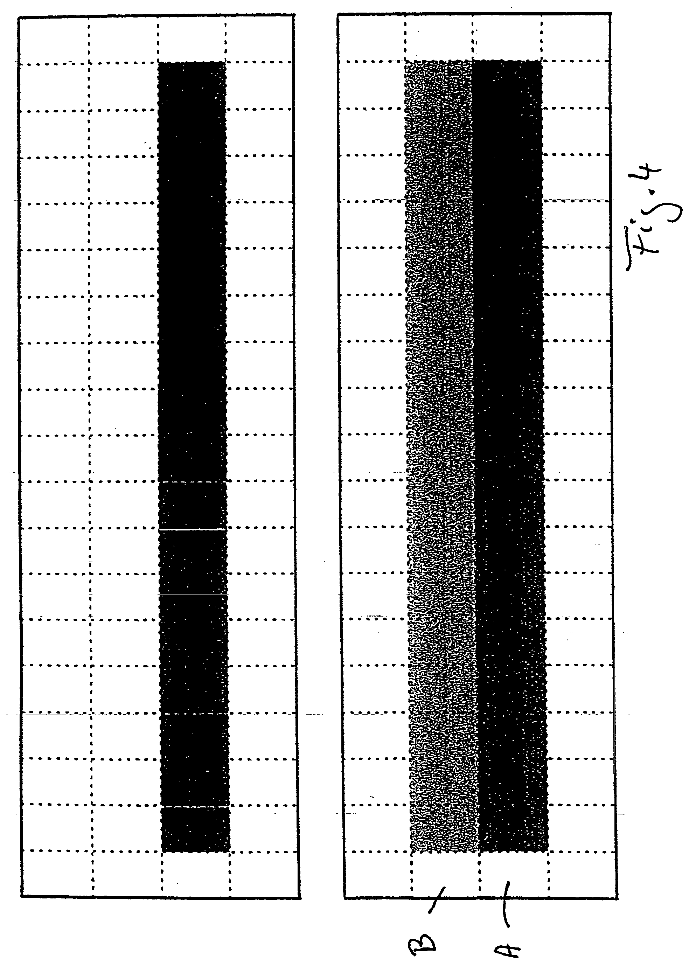

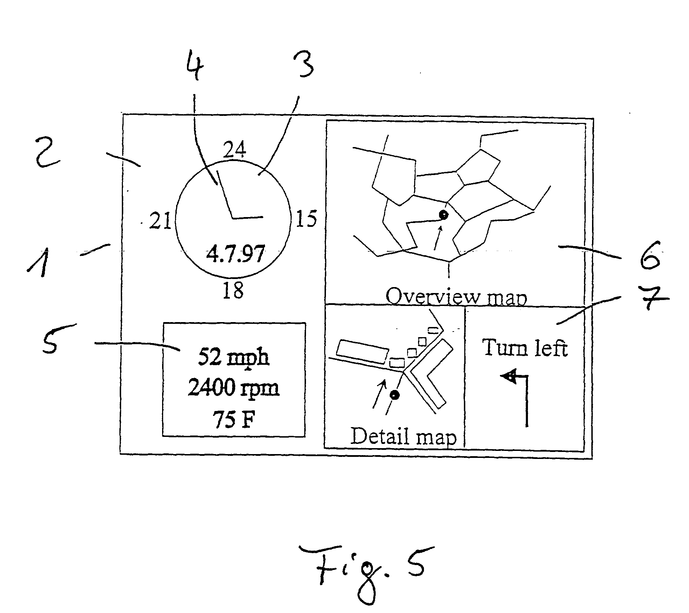

Die Figuren 1 bis 4 zeigen Objekte (Text und Linien), welche mit und ohne Antialiasing-Verfahren dargestellt sind. Wie der Figur 1 zu entnehmen ist, kann eine geringe Auflösung zu Verzerrungen und zur Unlesbarkeit bei kleinen schräggestellten Buchstaben kommen. Auch bei durch gerade Linien dargestellte Straßen und anderen graphischen Objekten sind starke Aliasing-Effekte zu beobachten wie aus Figur 3 und 4 zu entnehmen ist. Dies ist dadurch bedingt, daß graphische Objekte wie z.B. Vektoren durch Zeichenalgorithmen in eine Bitmap-Information umgewandelt und im Bildspeicher abgelegt werden müssen. Diese Algorithmen quantisieren unter Berücksichtigung der jeweiligen Anzeigeauflösung. Der idealen Linie folgend werden die jeweils am nächsten liegenden Bildpunkte voll aktiviert (Breseriham-Algorithmus). Beim Zeichnen nicht horizontaler oder vertikaler Linien entstehen durch die begrenzte Auflösung der Anzeige Treppenfunktionen (Aliasing). Beim Schieben von geraden Linien ergibt sich eine ruckhafte Bewegung, da immer nur zeilen- oder spaltenweise geschoben werden kann. Dieser Treppeneffekt kann durch Antialiasingverfahren verringert werden, indem z.B. die Entfernung der idealen Linien zum nächstmöglichen Pixel ermittelt wird. Dieser Abstand ergibt die resultierende Helligkeit (Farbmischung bei Farbanzeigen) des Pixels.

Wie in Figur 2 dargestellt, wird durch Antialiasing der Treppendarstellung der Linien stark reduziert. Dadurch können noch relativ kleine Buchstaben in gedrehter Form dargestellte werden. In dr Vergrößerung des Buchstabens "A" erkennt man, daß dieser nicht nur durch einen einzigen Farbton dargestellt wird.

Die Figur 3 zeigt vergrößert im oberen Bild einen Treppensprung, wie er ohne Antialiasing entsteht. Im unteren Bild der Figur 3 wurde ein Antialiasingverfahren angewandt, bei dem der Treppensprung für den Betrachter nicht mehr erkennbar ist.

Die Figur 4 zeigt ein Beispiel für das Schieben einer horizontalen Linie unter Verwendung eines Antialiasingverfahrens mit Subpixeln. Durch die Quantisierung unter Berücksichtigung der jeweiligen Anzeigenauflösung wird bei einer Verschiebung nach oben die Linie nur ruckartig springen können. Im unteren Bildbereich ist ein Antialiasingverfahren dargestellt, wobei z.B. die ideale Linie zu 70% in der Pixelreihe A dargestellt werden müßte und zu 30% in der Pixelreihe B. Durch den Antialiasing-Algorithmus wird nun der Abstand der idealen Linie zum nächst möglichen Pixel ermittelt und dieser Abstand für die resultierende Helligkeit bzw. für die Farbmischung bei Farbanzeigen der Pixel der Reihen A und B verwendet.

Die Figur 5 zeigt ein Kombiinstrument 1 mit einem Matrix-Display 2, welches gleichzeitig eine Uhr 3 mit Zeigern 4, sowie eine Navigationskarte 6, 7 darstellt. Die auf der Navigationskarte 6, 7 dargestellten Graphiken werden sich je nach Geschwindigkeit und Richtungswechsel des Fahrzeugs relativ schnell ändern, so daß eine relativ hohe Bildwiederholungsrate notwendig ist, um eine möglichst ruckfreie Wiedergabe der Darstellung zu ermöglichen. Dagegen bewegen sich die Zeiger 4 der Uhr 3 wesentlich langsamer als die Straßen- und Häuserlinien der Navigationskarte 6, 7. Für den Betrachter ist es daher erforderlich, daß die Uhr 3 samt deren Zeigern 4 und Ziffern mittels eines rechenintensiven Antialiasingverfahrens dargestellt werden, da sonst für den Betrachter die Treppensprünge der Graphikelemente zu deutlich hervortreten würden und als störend empfunden werden. Dagegen wird die Graphik der Navigationskarte je nach Bildwiederholungsfrequenz mal mit einem rechenintensiven Antialiasingverfahren dargestellt, wenn sich die Bildinformation relativ langsam ändert und andererseits mit einem weniger rechenintensiven Antialiasingverfahren oder sogar ohne Antialiasingverfahren dargestellt, sofern sich die Bildinformation schnell ändert.

## Patentansprüche

1. Anzeigevorrichtung zur optischen Wiedergabe von Grafik, mit einer Datenverarbeitungsanlage zur graphischen Aufbereitung von darzustellender Information und einem Display zur Darstellung der aufbereiteten Information in Form eines Bildes, wobei die Datenverarbeitungsanlage bei der graphischen Aufbereitung unter anderem Antialiasingverfahren einsetzt, und wobei die Datenverarbeitungsanlage bei der graphischen Aufbereitung das Bild in mindestens zwei Bildbereiche oder Bildobjekte teilt,
**dadurch gekennzeichnet, dass**
die Datenverarbeitungsanlage in Abhängigkeit der zur Verfügung stehenden Rechenleistung der Datenverarbeitungsanlage und/oder der Bildwiederholungsrate und/oder der Anzahl der darzustellenden Bildobjekte bei der graphischen Aufbereitung aufeinanderfolgend darzustellender Bilder
entweder für jeden der Bildbereiche oder Bildobjekte jeweils ein anderes Antialiasingverfahren wählt
oder die Datenverarbeitungsanlage für mindestens einen der Bildbereiche oder Bildobjekte jeweils eines der zu Verfügung stehenden Antialiasingverfahren auswählt und einsetzt, und bei der graphischen Aufbereitung des mindestens einen anderen Bildbereiches oder Bildobjektes auf den Einsatz eines Antialiasingverfahrrens verzichtet,
wobei die Auswahl des Antialiasingverfahrens oder der Antialiasingverfahren in Abhängigkeit der zur Verfügung stehenden Rechenleistung der Datenverarbeitungsanlage und/oder der Bildwiederholungsrate und/oder der Anzahl der darzustellenden Bildobjekte bei der graphischen Aufbereitung aufeinanderfolgend darzustellender Bilder erfolgt.

2. Anzeigevorrichtung nach einem der vorherigen Ansprüche,
**dadurch gekennzeichnet,**
**dass** die Datenverarbeitungsanlage bei der graphischen Aufbereitung eines Bildes solange ein rechenintensives Antialiasingverfahren für die Darstellung einzelner Bildbereiche und/oder Objekte einsetzt, bis die Anforderung nach einem Bild-Update generiert wird und dann für die restlich darzustellenden Bildbereiche oder Objekte keines oder ein wenig rechenintensives Antialiasingverfahren einsetzt.

3. Anzeigevorrichtung nach einem der vorherigen Ansprüche,
**dadurch gekennzeichnet,**
**dass** der Datenverarbeitungsanlage vorgebbar ist oder diese selbst ermittelt, ob die verfügbare Rechenleistung und Zeit für die Bildaufbereitung durch bestimmte Antialiasingverfahren ausreicht, und dass dementsprechend die Datenverarbeitungsanlage das Antialiasingverfahren zur Bildaufbereitung wählt, für das die Zeit und Rechenleistung zur vollständigen Bildaufbereitung ausreicht.

4. Anzeigevorrichtung nach einem der vorherigen Ansprüche,
**dadurch gekennzeichnet,**
**dass** der Datenverarbeitungsanlage vorgebbar ist, für die Bildaufbereitung eines bestimmten Bildbereiches und/oder Bildobjektes ein bestimmtes Antialiasingverfahren zu verwenden.

5. Anzeigevorrichtung nach einem der vorherigen Ansprüche,
**dadurch gekennzeichnet,**
**dass** der Datenverarbeitungsanlage vorgebbar ist, für die Bildaufbereitung eines bestimmten Bildbereiches und/oder Bildobjektes je nach verfügbarer Rechenleistung und Zeit, welche sich durch die Bildwiederholungsrate bestimmt, ein bestimmtes mehr oder weniger rechenintensives Antialiasingverfahren zu verwenden.

6. Anzeigevorrichtung nach einem der vorherigen Ansprüche,
**dadurch gekennzeichnet,**
**dass** die Datenverarbeitungsanlage folgende Verfahren entsprechend der Erfordernisse zur Generierung eines Bildes in Stufen wahlweise und auch in Kombination einsetzt, wobei die Rechenintensität der Verfahren mit jeder Stufe zunimmt:
Stufe 1: Standardalgorithmen ohne Antialiasing;
Stufe 2: Antialiasing-Algorithmen mit pixelbasierten Start- und Endpunkten bei konstanter Hintergrundfarbe;
Stufe 3: Antialiasing-Algorithmen mit subpixelbasierten Start- und Endpunkten bei konstanter Hintergrundfarbe;
Stufe 4: Antialiasing-Algorithmen mit pixelbasierten Start- und Endpunkten bei mehreren Hintergrundfarben;
Stufe 5: Antialiasing-Algorithmen mit subpixelbasierten Start-und Endpunkten bei mehreren Hintergrundfarben;
Stufe 6: Antialiasing-Algorithmen mit subpixelbasierten Start- und Endpunkten bei beliebig vielen Hintergrundfarben

7. Anzeigevorrichtung nach einem der vorherigen Ansprüche,
**dadurch gekennzeichnet,**
**dass** das Display ein Matrix-Display mit-geringer Auflösung ist, auf dem gleichzeitig oder nacheinander unterschiedlich schnell bewegte Grafiken und/oder Schriften dargestellt werden.

## Claims

1. Display apparatus for optical reproduction of graphics, having a data processing system for graphical preprocessing of information to be displayed, and having a display for displaying the preprocessed information in the form of an image, with the data processing system using, inter alia, antialiasing methods for the graphical preprocessing, and with the data processing system dividing the image, during the graphical preprocessing, into at least two image areas or image objects,
**characterized in that**
the data processing system in each case selects a different antialiasing method either for each of the image areas or image objects,
as a function of the available computation power in the data processing system and/or the framing rate and/or the number of image objects to be displayed in the graphical preprocessing of images to be displayed successively,
or the data processing system in each case selects one of the available antialiasing methods for at least one of the image areas or image objects, and uses this antialiasing method, and does not use any antialiasing method for the graphical preprocessing of the at least one other image area or image object,
with the antialiasing method or the antialiasing methods being selected as a function of the available computation power in the data processing system and/or the framing rate and/or the number of image objects to be displayed in the graphical preprocessing of images to be displayed successively.

2. Display apparatus according to the preceding claim,
**characterized**
**in that**, during the graphical preprocessing of an image, the data processing system uses a computation-intensive antialiasing method for the display of individual image areas and/or objects until the requirement for an image update is generated, and then uses none of the antialiasing methods, or a less computation-intensive antialiasing method, for the rest of the image areas or objects to be displayed.

3. Display apparatus according to one of the preceding claims,
**characterized**
**in that** it is possible to predetermine for the data processing system, or for the data processing system itself, to determine whether the available computation power and time are sufficient for image processing by specific antialiasing methods, and in that, in a corresponding manner, the data processing system selects for image preprocessing that antialiasing method for which the time and computation power are sufficient for complete image preprocessing.

4. Display apparatus according to one of the preceding claims,
**characterized**
**in that** it is possible to predetermine a specific antialiasing method to be used by the data processing system for the image preprocessing of a specific image area and/or image object.

5. Display apparatus according to one of the preceding claims,
**characterized**
**in that**, depending on the available computation power and time, which is governed by the framing rate, it is possible to predetermine that the data processing system would use a specific more or less computation-intensive antialiasing method for the image preprocessing of a specific image area and/or image object.

6. Display apparatus according to one of the preceding claims,
**characterized**
**in that** the data processing system uses the following methods in accordance with the requirements for generation of an image selectively in stages and also in conjunction with one another, with the computation intensity of the method increasing with each stage:
Stage 1: standard algorithms without antialiasing;
Stage 2: antialiasing algorithms with pixel-based start and end points and with a constant background colour;
Stage 3: antialiasing algorithms with sub-pixel-based start and end points and with a constant background colour;
Stage 4: antialiasing algorithms with pixel-based start and end points and with two or more background colours;
Stage 5: antialiasing algorithms with sub-pixel-based start and end points and with two or more background colours;
Stage 6: antialiasing algorithms with sub-pixel-based start and end points and with any desired number of background colours.

7. Display apparatus according to one of the preceding claims,
**characterized**
**in that** the display is a low-resolution matrix display on which graphics and/or scripts moving at different speeds are displayed at the same time or successively.

## Revendications

1. Dispositif d'affichage pour présenter des graphiques, qui comprend un dispositif de traitement de données pour la préparation graphique d'informations à présenter et un affichage pour présenter sous la forme d'une image les informations préparées, le dispositif de traitement de données utilisant entre autres, lors de la préparation graphique, un procédé anti-crénelage et le dispositif de traitement de données divisant l'image en au moins deux zones d'image ou objets d'image lors de la préparation graphique, **caractérisé en ce qu'**en fonction de la puissance de calcul dont il dispose, de la fréquence de reproduction de l'image et/ou du nombre d'objets d'image à présenter, le dispositif de traitement de données sélectionne et utilise lors de la préparation graphique d'images à présenter successivement
soit chaque fois un procédé anti-crénelage différent pour chaque zone d'image ou objet d'image
soit, chaque fois pour au moins l'une des zones d'image ou l'un des objets d'image, un des procédés anti-crénelage disponibles, le dispositif de traitement de données n'ayant alors pas recours à un procédé anti-crénelage lors de la préparation graphique d'au moins une autre zone d'image ou d'au moins un autre objet d'image, et lors de la préparation graphique d'images à présenter successivement, le ou les procédés anti-crénelage sont sélectionnés en fonction de la puissance de calcul disponible du dispositif de traitement de données, de la fréquence de reproduction de l'image et/ou du nombre d'objets d'image à présenter.

2. Dispositif d'affichage selon la revendication précédente, **caractérisé en ce que**, lors de la préparation graphique d'une image, pour présenter diverses zones d'image ou divers objets d'image, le dispositif de traitement de données utilise, jusqu'à ce que qu'une demande de mise à jour de l'image soit délivrée, un procédé anti-crénelage qui présente une haute intensité de calcul et, pour les zones d'images ou les objets d'images qui restent, n'utilise aucun procédé anti-crénelage ou utilise un procédé à faible intensité de calcul.

3. Dispositif d'affichage selon l'une quelconque des revendications précédentes, **caractérisé en ce que** le dispositif de traitement de données est préalablement défini pour disposer d'assez de temps et de puissance de calcul pour la préparation de l'image au moyen d'un procédé anti-crénelage déterminé ou détermine lui-même s'il dispose de ce temps et de cette puissance et **en ce que** le dispositif de traitement de données sélectionne en fonction de cela le procédé anti-crénelage qui lui permet de préparer complètement l'image dans le temps et avec la puissance de calcul dont il dispose.

4. Dispositif d'affichage selon l'une quelconque des revendications précédentes, **caractérisé en ce que** le dispositif de traitement de données est préalablement défini pour utiliser un procédé anti-crénelage déterminé pour préparer un objet déterminé d'image ou une zone déterminée d'image.

5. Dispositif d'affichage selon l'une des revendications précédentes, **caractérisé en ce que** le dispositif de traitement de données est préalablement défini pour utiliser chaque fois un procédé anti-crénelage à intensité de calcul plus ou moins élevée en fonction des disponibilités en temps et en puissance de calcul qui sont déterminées par la fréquence de reproduction de l'image, pour préparer un objet déterminé d'image et/ou une zone déterminée d'image.

6. Dispositif d'affichage selon l'une des revendications précédentes, **caractérisé en ce que** le dispositif de traitement de données utilise sélectivement par degrés un ou plusieurs des procédés suivants en fonction des exigences de création d'une image, l'intensité de calcul du procédé augmentant à chaque degré:
degré 1: algorithmes standard sans anti-crénelage;
degré 2: algorithmes anti-crénelage avec points initiaux et points finaux basés sur des pixels, la couleur de fond étant constante;
degré 3: algorithmes anti-crénelage avec points initiaux et points finaux basés sur des sous-pixels, la couleur de fond étant constante;
degré 4: algorithmes anti-crénelage avec points initiaux et points finaux basés sur des pixels et plusieurs couleurs de fond;
degré 5: algorithmes anti-crénelage avec points initiaux et points finaux basés sur des sous-pixels et plusieurs couleurs de fond;
degré 6: algorithmes anti-crénelage avec points initiaux et points finaux basés sur des sous-pixels et un nombre quelconque de couleurs de fond.

7. Dispositif d'affichage selon l'une quelconque des revendications précédentes, **caractérisé en ce que** l'affichage est un affichage matriciel à faible résolution au moyen duquel on présente des graphiques et/ou des textes qui changent simultanément ou successivement avec une grande rapidité.
